# EUROPEAN PATENT APPLICATION

(11) **EP 2 039 599 A2**
(43) Date of publication of application: **25.03.2009**
(21) Application number: 08275055.5
(22) Date of filing: 18.09.2008
(51) Int. Cl.: B62H 5/00, B62H 5/14

(54) **Bicycle with integrated bike-locking mechanism**

(30) Priority: 21.09.2007 US 903319
(71) Applicant: Di Palma Ltd, 97 Leighton Road London, Greater London NW5 2QJ (GB)
(72) Inventor: Docking, Charlotte, London, Greater London NW5 2QJ (GB)
(74) Representative: Bingham, Ian Mark

(57) **Abstract**

The invention is a bicycle frame (11) having an integrated bicycle locking mechanism (27). Roughly mid-length of a tube of the bicycle frame is removed in order to accommodate the locking mechanism (27). Secured within one of the exposed ends of the frame is a flexible wire (20) that can emerge and lock itself to a locking receptacle (28) located on the other open end of the frame (13). Located on the exposed end of the flexible linkage is the locking mechanism (27). The invention is designed so as to enable the flexible wire (20) to wrap around a stationary object, such as a pole or bicycle stand. Alternatively, the flexible wire can wrap around the rear wheel of the bicycle so as to prevent the bicycle from being used.

## Description

The present invention relates to the field of bicycle locks, more specifically, a bicycle with an integrated bicycle locking mechanism.

The Noer Patent (U.S. Patent No. 6,948,731) discloses a bicycle frame having a pivotal tube such that the tube can be moved so that the bicycle can be secured around a post or such and then the tube returned to the original position as to secure the bicycle to the post. However, the bicycle disclosed under the Noer Patent does not have a locking mechanism integrated into the movable pivotal tube.

The Hoffman Patent (U.S. Patent No. 6,505,846) discloses a bicycle cable locking system wherein the cable for securing the bicycle is stored inside the frame tubing. However, the cable locking system disclosed under the Hoffman Patent does not utilize a bicycle frame that has an open section of which the locking mechanism consumes when the locking mechanism is not in use, and of which can be unlocked and enable the locking linkage to exit from the bicycle frame in order to lock the bicycle to a secure object.

The Lundberg Patent (U.S. Patent No. 4,870,843) discloses a combined tether and cylinder lock for locking a bicycle wherein the tether and lock are stored in the bicycles hollow handlebar. However, the tether and cylinder lock disclosed under the Lundberg Patent are situated about the handlebar, and are not integrated into the lower frame of the bicycle.

The Gould Patent (U.S. Patent No. 4,023,387) discloses a cable storing and retrieving system to be mounted to the frame of a bicycle. However, the cable storing and retrieving system disclosed under the Gould Patent does not is an system that is mounted onto an existing bicycle frame and is not integrated into the design of the bicycle frame.

The Kelly Patent (U.S. Patent No. 3,814,462) discloses a bicycle frame having a two piece crossbar with a locking mechanism that holds the two pieces together in an operative state wherein the crossbar can be separated so as to secure the bicycle around a permanent post-like object and then reconnected and locked so as to secure the bicycle. However, the bicycle frame disclosed under the Kelly Patent does not use a flexible locking linkage that rests within the frame of the bicycle wherein the flexible linkage can extend outwardly from the frame and wrap around a secure object wherein the ends of the flexible linkage lock together thereby securing the bicycle.

The Wilson et al. Patent Application Publication (U.S. Pub. No. 2002/0073751) discloses a cable locking device designed to be fitted into the end of a bicycle handlebar. As discussed with the Lundberg Patent above, the cable locking device disclosed under the Wilson Publication is located in the handlebar and is not integrated into the design of the lower frame of the bicycle.

The Arblaster Patent (U.S. Patent No. 4,024,741) discloses a cable locking device for a bicycle wherein the locking bolt and cable are stored inside the handlebar of the bicycle. Again, the cable locking device disclosed under the Arblaster Patent, as disclosed under the Lundberg Patent and Wilson Publication, places the locking mechanism in the handlebar of the bicycle, as opposed to integrating the locking mechanism into the design of the lower portion of the frame of the bicycle.

The Zapushek Patent (U.S. Patent No. Des. 461,392) illustrates a pin lock having a similar structure as the pin lock used disclosed under this Patent Application. However, the Zapushek Patent does not illustrate how the pin lock unlocks and separates.

The Hardesty Patent (U.S. Patent No. Des. 451,368) illustrates a bicycle locking device having a retractable cable.

In light of the above discussed prior art there is a need for a bicycle frame that incorporates a locking mechanism into the design of the bicycle frame from which a flexible linkage emerges and can be wrapped around a secure object, and thereafter retract within the frame when not in use.

The invention is a bicycle frame having an integrated bicycle locking mechanism. Roughly mid-length of a tube of the bicycle frame is removed in order to accommodate the locking mechanism. Secured within one of the exposed ends of the frame is a flexible wire that can emerge and lock itself to a locking receptacle located on the other open end of the frame. Located on the exposed end of the flexible linkage is the locking mechanism. The invention is designed so as to enable the flexible wire to wrap around a stationary object, such as a pole or bicycle stand. Alternatively, the flexible wire can wrap around the rear wheel of the bicycle so as to prevent the bicycle from being used.

Accordingly, the present invention provides a bicycle with integrated bike-locking mechanism comprising (a) a bicycle frame made of a hollow tubular construction wherein a section of said frame has a cut-out leaving a first (left) frame piece and a second (right) frame piece and wherein said first frame piece comprises a lip at an end thereof (b) a flexible wire wherein said flexible wire has an overall length sufficient to enable the flexible wire to wrap around either the front wheel or the rear wheel of the bicycle and/or a stationary object located within the immediate vicinity of the bicycle, and wherein said flexible wire comprises a stopper fixedly attached to a proximal end thereof and slidably engaged with the interior surface of said first frame piece and sized such that said lip prevents said stopper from exiting said frame piece when in use, and wherein said flexible wire comprises a locking mechanism fixedly connected to another distal end thereof and (c) a locking receptacle, wherein the locking receptacle is located on said bicycle frame and wherein the locking receptacle is designed to receive and secure the locking mechanism, characterised in that said flexible wire can be retracted into said first frame piece such that said locking mechanism can fill in the opening between said first frame piece and said second frame piece.

Preferably, said locking receptacle is located on said second frame piece.

Conveniently, said locking mechanism extends outwardly from said frame such that said locking mechanism prevents, at least partially, the rotation of a chain carrier thereby preventing the bicycle to achieve its transporting function.

Advantageously, said locking receptacle is immediately adjacent to the opening in the bicycle frame.

Preferably, said flexible wire comprises a flexible exterior wire and a flexible interior wire.

Advantageously, said locking mechanism is permanently affixed to the opposite end of the flexible interior wire.

Preferably, said flexible exterior wire is made of a woven metal of durable construction that resists oxidation and covers the flexible interior wire.

Conveniently, said flexible exterior wire is made from a lightweight yet strong material comprising metal or a durable plastic.

Advantageously, said flexible interior wire is made from a tool strength metal.

Preferably, said locking mechanism comprises a key and lock configuration.

Alternatively, said locking mechanism comprises a combination lock configuration.

Advantageously, a plurality of locking receptacles is mounted at various locations on the bicycle frame.

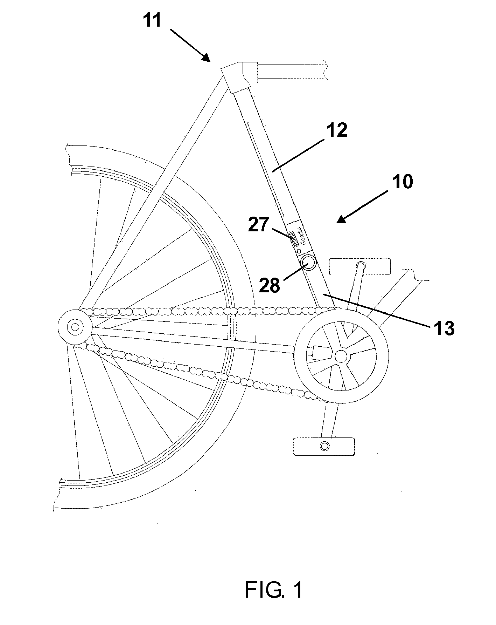

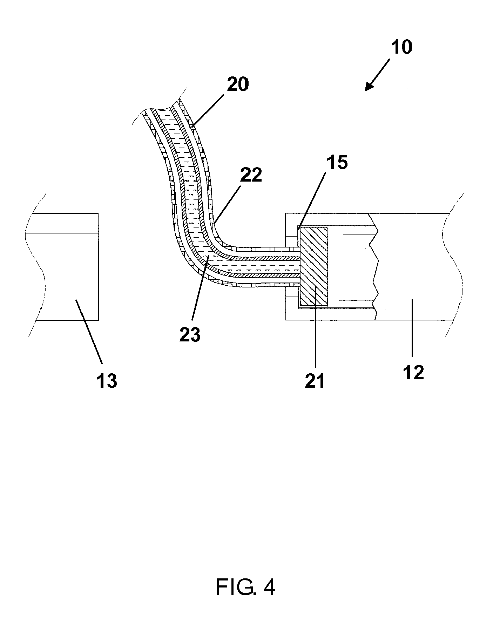

The accompanying drawings, which are included to provide a further understanding of the invention and are incorporated in and constitute a part of this specification, illustrate embodiments of the invention and together with the description serve to explain the principles of the invention:
In the drawings:
   FIG. 1 illustrates a side view of the invention;
   FIG. 2 illustrates an isometric view of the invention in use;
   FIG. 3 illustrates a detailed front view of the locking mechanism and the flexible linkage; and
   FIG. 4 illustrates a detailed cut away view of the invention.
Detailed reference will now be made to the preferred embodiment of the present invention, examples of which are illustrated in FIG. 1-4. A bicycle locking system 10 (hereinafter invention) includes a bicycle frame 11 having a cut-out section consisting of a first (left) frame piece 12 and a second (right) frame piece 13. It shall be noted that the bicycle frame 11 consists of hollow, tubular pieces. Located at the open end of the left frame piece 12 is a lip 15.
   Located within the left frame piece 12 is a flexible line 20, which has a stopper 21 permanently affixed to an end of the flexible line 20. The stopper 21 prevents the flexible line 20 from completely exiting the left frame piece 12 as depicted in FIG. 4.

In the present arrangement, the flexible line 20 consists of a flexible exterior wire 22 and an interior wire 23 that connects to the stopper 21. The flexible exterior wire 22 may be made from a woven durable metal that resists oxidation, is lightweight, and shields the interior wire 23 from the elements as well as from shearing forces. The interior wire 23 may be made of a flexible tool strength material.

Located at the opposite end of the flexible line 20 is a locking mechanism 27. The locking mechanism 27 is permanently secured to the opposite end of the flexible line 20, and may incorporate a variety of locking configurations, such as a lock-key, or combination lock.

When the invention 10 is not in use, the locking mechanism 27 is designed to fit within the opening between the ends of the left frame piece 12 and the right frame piece 13. It is being asserted that the principal benefit of the invention 10 is that the flexible line 20 retracts into the bicycle frame 11 and the locking mechanism 27 restores the void between the left and right frame 12, 13 so as to restore the integrity of the bicycle frame 11.

Located along the exterior surface of the right frame piece 13 is a locking receptacle 28, which is designed to receive the locking mechanism 27.

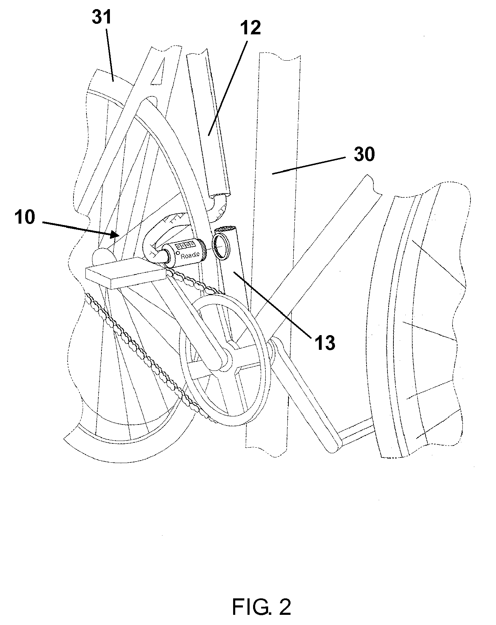

The invention 10 is used by removing the locking mechanism 27 from the void between the left frame piece 12 and the right frame piece 13. Next, the flexible wire 20 is either wrapped around a stationary object 30 (not depicted in Figure 2) and/or the flexible wire 20 is wrapped around a rear wheel 31 of the bicycle. Finally, the locking mechanism 27 is locked onto the locking receptacle 28.

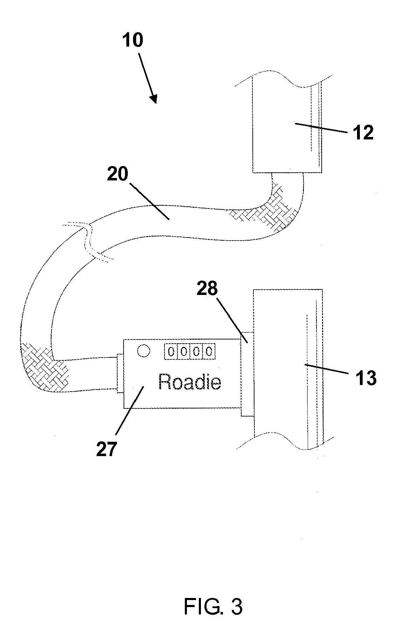

From the drawings it will be appreciated that, in operation that is when locking mechanism 27 is secured to locking receptacle 28 (best seen in figure 3), said locking mechanism 27 extends outwardly from and substantially perpendicularly to frame 11 so that locking mechanism 27 hinders or prevents chain carrier 40 to achieve its functional rotation by mechanically interfering with one bicycle pedal 42 thereby preventing the bicycle to operate its normal person-transporting function. This provides an additional means for preventing the use of the bicycle in the event that, for instance, a suitable stationary object is not accessible and/or could not be found in the vicinity of the bicycle to achieve immobilization thereof as described above.

By substantially perpendicular we mean preferably ninety degrees relative to the plan defined by frame 11 however, it will appreciated that any angles other than ninety degrees suitable for achieving the desired technical effect are also contemplated in this application.

It shall be noted that the location of the locking receptacle 28 may be positioned at other locations on the bicycle frame 11 so as to secure other portions of the bicycle frame 11. It shall be further assumed that the invention 10 may include a plurality of locking receptacles 28 that are located throughout the bicycle frame 11 so as to provide the end user with a plurality of options in order to secure the bicycle frame 11 to a variety of stationary objects (not depicted).

It shall be noted that the invention 10 can be designed into the manufacturing of the bicycle or that the invention 10 can be an after-market product that is installed on an existing bicycle.

It shall be noted that variations and alternatives of the present embodiment are readily apparent to those of ordinary skill in the art upon reading the present disclosure, and such variations and alternatives including equivalent structures and structural equivalents are incorporated in the invention unless otherwise expressly indicated in the claims.

While the embodiments of the invention have been disclosed, certain modifications may be made by those skilled in the art to modify the invention without departing from the spirit of the invention.

## Claims

1. A bicycle with integrated bike-locking mechanism comprising:
(a) a bicycle frame (11) made of a hollow tubular construction,
wherein a section of said frame has a cut-out leaving a first frame piece (12) and a second frame piece (13) and,
wherein said first frame piece (12) comprises a lip (15) at an end thereof;
(b) a flexible wire (20),
wherein said flexible wire has an overall length sufficient to enable the flexible wire to wrap around either the front wheel or the rear wheel of the bicycle and/or a stationary object located within the immediate vicinity of the bicycle, and
wherein said flexible wire (20) comprises a stopper (21) fixedly attached to a proximal end thereof and slidably engaged with the interior surface of said first frame piece (12) and sized such that said lip (15) prevents said stopper (21) from exiting said frame piece (12) when in use, and
wherein said flexible wire (20) comprises a locking mechanism (27) fixedly connected to another distal end thereof,
(c) a locking receptacle (28);
wherein the locking receptacle is located on said bicycle frame (11), and
wherein the locking receptacle (28) is designed to receive and secure the locking mechanism (27), and in that said flexible wire (20) can be retracted into said first frame piece (12) such that said locking mechanism (27) can fill in the opening between said first frame piece (12) and said second frame piece (13);

2. The bicycle with integrated bike-locking mechanism as claimed in Claim 1, wherein said locking receptacle (28) is located on said second frame piece (13).

3. The bicycle with integrated bike-locking mechanism as claimed in either of Claims 1 or 2, wherein said locking mechanism (27) extends outwardly from said frame (11) such that said locking mechanism (27) prevents, at least partially, the rotation of a chain carrier (40) thereby preventing the bicycle to achieve its transporting function.

4. The bicycle with integrated bike-locking mechanism as claimed in any one of Claims 1 to 3, wherein said locking receptacle (28) is immediately adjacent to the opening in the bicycle frame.

5. The bicycle with integrated bike-locking mechanism as claimed in any one of Claims 1 to 4, wherein the flexible wire (20) comprises a flexible exterior wire (22) and a flexible interior wire (23).

6. The bicycle with integrated bike-locking mechanism as claimed in any one of Claims 1 to 5, wherein said locking mechanism (27) is permanently affixed to the opposite end of the flexible interior wire (23).

7. The bicycle with integrated bike-locking mechanism as claimed in any one of Claims 1 to 6, wherein the flexible exterior wire (22) is made of a woven metal of durable construction that resists oxidation and covers the flexible interior wire (23).

8. The bicycle with integrated bike-locking mechanism as claimed in any one of Claims 1 to 7, wherein the flexible, exterior wire is made from a lightweight yet strong material comprising metal or a durable plastic.

9. The bicycle with integrated bike-locking mechanism as claimed in any one of Claims 1 to 8, wherein the flexible interior wire (23) is made from a tool strength metal.

10. The bicycle with integrated bike-locking mechanism as claimed in any one of Claims 1 to 9, wherein the locking mechanism (27) comprises a key and lock configuration.

11. The bicycle with integrated bike-locking mechanism as claimed in any one of Claims 1 to 9, wherein the locking mechanism (27) comprises a combination lock configuration.

12. The bicycle with integrated bike-locking mechanism as claimed in any one of Claims 1 to 11, wherein a plurality of locking receptacles is mounted at various locations on the bicycle frame (11).
